# EUROPÄISCHE PATENTSCHRIFT

(11) **EP 1 576 018 B1**
(45) Veröffentlichungstag und Bekanntmachung des Hinweises auf die Patenterteilung: **31.03.2010**
(21) Anmeldenummer: 03767623.6
(22) Anmeldetag: 24.11.2003
(51) Int. Cl.: C08F 20/04, C08F 20/12, C09J 133/06

(54) **BIMODALE ACRYLATHAFTKLEBEMASSEN**
BIMODAL ACRYLATE PRESSURE-SENSITIVE ADHESIVE COMPOUNDS
MATIERES AUTO-ADHESIVES BIMODALES A BASE D'ACRYLATE

(30) Priorität: 19.12.2002 DE 10259458
(43) Veröffentlichungstag der Anmeldung: 21.09.2005
(73) Patentinhaber: TESA SE, 20253 Hamburg (DE)
(72) Erfinder: HUSEMANN, Marc, 22605 Hamburg (DE); ZÖLLNER, Stephan, 22043 Hamburg (DE)
(74) Vertreter: Stubbe, Andreas
(86) Internationale Anmeldenummer: PCT/EP2003/013167
(87) Internationale Veröffentlichungsnummer: WO 2004/056884

(56) Entgegenhaltungen:
- US-A- 4 501 845

## Beschreibung

Die Erfindung betrifft ein Verfahren zur Herstellung eines Polyacrylats mit wenigstens bimodaler Molekulargewichtsverteilung, ein mit diesem Verfahren erhältliches Polyacrylat und dessen Verwendung.

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Durch die damit verbundene Einführung der Hotmelt-Technologie werden immer höhere Anforderungen an die Klebemassen gestellt. Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen diese Acrylathaftklebemassen aber auch hohen Anforderungen im Bereich der Scherfestigkeit und der Klebkraft gerecht werden. Dieses Anforderungsprofil wird durch Polyacrylate mit hohem Molekulargewicht, hoher Polarität und anschließender effizienter Vernetzung erreicht. Diese sehr scherfesten und polaren Haftklebemassen besitzen aber den Nachteil, daß sie für den Hotmelt-Extrusionsprozeß nicht gut geeignet sind, da durch die hohe Fliessviskosität hohe Anwendungstemperaturen erforderlich und zudem durch Scherung im Extruder das Molekulargewicht des Polymers abgebaut wird. Durch diese Schädigung wird das klebtechnische Niveau deutlich herabgesetzt. Die Klebkraft und die Anfaßklebrigkeit (Tack) sind in der Regel gering, da die Glasübergangstemperatur durch die polaren Anteile in den Klebemassen relativ hoch liegt. Besonders die Scherfestigkeiten der Hotmelt-beschichteten Acrylathaftklebemassen fallen - im Vergleich zur ursprünglichen mit Lösungsmittel beschichteten Haftklebemasse - deutlich ab. Daher werden zur Zeit unterschiedliche Konzepte zur Verringerung der Fließviskosität und damit der leichteren Extrusionsbeschichtung dieser Haftklebemassen untersucht.

Ein sehr wichtiges Konzept ist die gezielte Einstellung der Molekulargewichtsverteilung zur besseren Verarbeitbarkeit. Bimodale Molekulargewichtsverteilungen unterstützen die leichtere Verarbeitbarkeit, da durch niedermolekulare Anteile die Fließviskosität herabgesetzt wird und durch hochmolekulare Anteile die Scherfestigkeit erhöht wird. Bimodale Molekulargewichtsverteilungen werden zumeist durch gezieltes Blending hergestellt. In US 5,548,014 werden Polyolefin-Blends mit dieser Methode hergestelltund im Hotmelt-Verfahren verarbeitet. Der generelle Nachteil dieser Methode ist, dass in zwei Verfahrenschritten zunächst die Polymere mit unterschiedlichem mittleren Molekulargewicht hergestellt werden und anschließend gemischt werden müssen. Ein Verfahren zu einem solchen Blending von Polyolefinen in US 5,863,665 und 5,773,155 beschrieben. Auch hier muss relativ viel Energie eingebracht werden, um die Systeme miteinander zu mischen, da Polymere - bedingt durch ihre langen Polymerketten - sich relativ schlecht miteinander mischen.

Weiterhin sind bimodale Molekulargewichtsverteilungen für den Stärkeabbau in Polyacrylatdispersionen offenbart worden (US 6,084,018, US 6,080,813, US 5,705,563). Hier besteht aber kein Zusammenhang, weder mit dem Elastomer noch einem Hotmeltextrusionsprozess.

In den Patenten US 4,619,979 und US 4,843,134 ist ein Herstellungsverfahren zur lösemittelfreien Polymerisation von Acrylaten beschrieben. Hier wurden in einem bestimmten Polymerisationsreaktor hochverzweigte Polymere hergestellt. Nachteilig sind der während der Polymerisation entstehende hohe Gelanteil, der zwar eine bimodale Molekulargewichtsverteilung ermöglicht, aber eine Beschichtung eines solchen Materials unmöglich macht und der geringe Umsatz der Polymerisation, so dass relativ aufwendig Acrylatmonomere dem System wieder entzogen werden müssen. Da Acrylathaftklebemassen zumeist aus mehreren Comonomeren bestehen und diese unterschiedliche Siedetemperaturen und Dampfdrücke besitzen, ist dies ein sehr aufwendiges Verfahren.

Aufgabe der Erfindung ist es, die im Stand der Technik bestehenden Nachteile zu vermeiden und ein breites bimodal verteiltes Polyacrylat mit guter Hotmelt-Verarbeitbarkeit unter Erhalt guter klebtechnischer Eigenschaften zur Verfügung zu stellen. Vorzugsweise soll das Polyacrylat einen geringen Restmonomerenanteil aufweisen.

Gelöst wird diese Aufgabe durch ein Polymerisationsverfahren gemäß dem Hauptanspruch., sowie ein Polyacrylat und dessen Verwendung gemäß den nebengeordneten Ansprüchen. Vorteilhafte Weiterbildungen der Erfindung sind in den Unteransprüchen gekennzeichnet.

Demgemäß ist ein Verfahren zur Herstellung eines Polyacrylats mit wenigstens bimodaler Molekulargewichtsverteilung Gegenstand der Erfindung, welches sich dadurch auszeichnet, dass ein Monomerengemisch, welches
a1) Acrylsäure und/oder Acrylsäureester der Formel CH₂ = C(R')(COOR²), wobei R' = H oder CH₃ und R² eine lineare, verzweigte oder zyklische Alkylkette mit 1 bis 20 C-Atomen ist,
   zu 70 - 100 Gew.-%, bezogen auf das Polymer,
a2) olefinisch ungesättigte Monomere mit funktionellen Gruppen, zu 0 - 30 Gew.-%, bezogen auf das Polymer,
   enthält in einer wenigstens zweiphasigen radikalischen Polymerisation zu einem Polyacrylat mit breiter wenigstens bimodaler Molekulargewichtsverteilung polymerisiert wird,
wobei in einer ersten Phase der wenigstens zweiphasigen Polymerisation durch eine im Verhältnis zum Monomer geringe Initiatorkonzentration zu einem ersten Polymerisat mit einem im Mittel hohen Molekulargewicht polymerisiert wird, wobei vor vollständigem Abreagieren der Monomermischung durch wenigstens einmaligen Zusatz eines Reglers eine nächste Phase der Polymerisation gestartet wird und wobei in dieser weiteren Phase oder weiteren Phasen ein weiteres Polymerisat mit einem im Mittel niedrigeren Molekulagewicht aufgebaut wird.

Unter einem breiten bimodal verteilten Polyacrylat wird ein solches verstanden, bei dem ein Polymer bzw. eine Molekulargewichts-Population (nachfolgend P₁) mit relativ geringem mittleren Molekulargewicht und ein Polymer bzw. eine Molekulargewichts-Population mit relativ hohem mittleren Molekulargewicht (nachfolgend P₂) nebeneinander vorhanden sind, so dass die Maxima der beiden Molekulargewichtsverteilungen vorzugsweise wenigstens 50.000 g/mol auseinanderliegen. In bevorzugter Ausführung wird die Polymerisation zweiphasig ausgeführt und das erhaltene Polymer besitzt zwei ausgeprägte Molekulargewichtspeaks im Gelpermeationschromatogramm, d.h. zwei ausgeprägte Maxima in der Molekulargewichtsverteilung, die zumindest um 50.000 g/mol auseinanderliegen.

Die Polydispersität der Polymerisate ist in einer bevorzugten Ausführungsform größer als 6.

Vorzugsweise wird die wenigstens zweiphasige radikalische Polymerisation zu einem Gesamtumsatz aller -Polymerisations-Phasen größer 97 % gefahren, so dass der Restmonomerengehalt sehr gering wird.

Die Zusammensetzung der entsprechenden Monomere wird so gewählt, dass die resultierenden Klebemassen entsprechend D. Satas [Handbook of Pressure Sensitive Adhesive Technology, 1989, Verlag VAN NOSTRAND REINHOLD, New York] haftklebende Eigenschaften besitzen,

Die Polymerisation kann in Polymerisationsreaktoren durchgeführt werden, die im allgemeinen mit einem Rührer, mehreren Zulaufgefäßen, Rückflußkühler, Heizung und Kühlung versehen sind und für das Arbeiten unter N2-Atmosphäre und Oberdruck ausgerüstet sind.

Die freie radikalische Polymerisation wird in Gegenwart eines organischen Lösungsmittels oder in Gemischen aus organischen Lösungsmitteln durchgeführt. Bevorzugt wird so wenig Lösungsmittel wie möglich eingesetzt. Die Polymerisationszeit beträgt - je nach Umsatz und Temperatur - zwischen 6 und 48 h. Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet.

Für das erfinderische Verfahren werden als Polymerisationsinitiatoren übliche radikalbildende Verbindungen wie beispielsweise Peroxide und Azoverbindungen eingesetzt. Auch Initiatorgemische können verwendet werden. Für eine bevorzugte Auslegung der Erfindung beträgt in der ersten Phase das Molverhältnis von Initiator zu Monomer kleiner 0.005, besonders bevorzugt bei kleiner 0.003. Die Initiatorzugabe in der ersten Phase kann in einem oder in mehreren Schritten erfolgen. Als Initiatoren werden besonders bevorzugt Azobisisobutyronitril (AIBN) oder Vazo 67™ (Fa. DuPont) eingesetzt.

In der zweiten Phase werden der Polymerisation Regler zur Molekulargewichtssenkung beigesetzt.

Als sogenannte Polymerisationsregier können z.B. Alkohole, Ether, Dithioether, Dithiocarbonate, Trithiocarbonate, Nitroxide, Alkylbromide, Thiole, TEMPO- und TEMPODerivate hinzugesetzt werden. In einer besonders bevorzugten Auslegung der Erfindung wird Isopropanol als Regler verwendet. Die Zugabe des Reglers erfolgt frühestens nach einer Stunde Polymerisationszeit, aber spätestens 2 h vor dem Reaktionsende. Mit dem Zugabezeitpunkt kann die Molekulargewichtsverteilung gesteuert werden. Je später je Zugabe des Reglers erfolgt, desto geringer wird der niedermolekularere Anteil des Polyacrylates. Die Menge des Reglers richtet sich nach der Effizienz, wobei mindestens 0.01 Gewichtsanteile bezogen auf die Monomere eingesetzt werden. Für den besonders bevorzugten Regler Isopropanol werden zwischen 3 und 30 besonders bevorzugt zwischen 5 und 25 Gewichtsanteile Isopropanol bezogen auf die Monomere eingesetzt.

Weiterhin kann es von Vorteil sein, dass zur Umsatzerhöhung ein Initiator hinzugesetzt wird, der eine Vernetzungseffizienz von größer 5 besitzt. Solche Initiatoren sind z.B. Perkadox 16^{™}m der Fa. Akzo Nobel.

Die Aufgabe der Erfindung wird weiterhin gelöst durch ein neues Polyacrylat mit breiter, wenigstens und bevorzugt bimodaler Molekulargewichtsverteilung, bei dem die Molekulargewichtsmaxima in den Molekulargewichtsverteilungen wenigstens zweier Polymerisate um vorzugsweise wenigstens 50.000 g/mol auseinanderliegen. Das erfindungsgemäße Polyacrylat ist aufgrund seiner Eigenschaften für die Verwendung in Schmelzbeschichtungsverfahren und damit für die Herstellung von Haftklebebändern und Haftklebeartikeln besonders gut geeignet. Es zeigt eine gute Scherfestigkeit und eine bei Hotmelt-Verarbeitung ausreichende Fließviskosität bei moderaten Temperaturen.

Weiterhin kann es von Vorteil sein, die erfindungsgemäßen Polymere mit Vernetzern abzumischen. Als Vernetzer lassen sich hier alle bi- oder multifunktionellen Verbindungen einsetzen, deren funktionelle Gruppen mit den Polyacrylaten eine Verknüpfungsreaktion eingehen können, insbesondere Polymerisations-, Polykondensations- oder Polyadditionsreaktionen. Bevorzugt werden diese Reaktionen an einer Carboxylgruppe angreifen. Als Vernetzer sind insbesondere Epoxide oder Isocyanate mit mindestens zwei funktionellen Gruppen, aber auch alle anderen mit Carboxylgruppen reagierenden Verbindungen, geeignet. Eingesetzt werden können hierfür auch Metall-Chelat-Verbindungen.

In vorteilhafter Ausgestaltung der Erfindung enthält das Polyacrylat daher olefinisch ungesätttigte Monomer-Einheiten mit funktionellen Gruppen in einem Anteil von 0 - 30 Gew.-% bezogen auf das Polymer. Diese Gruppen werden zur Steuerung der klebtechnischen Eigenschaften eingesetzt
Als Vinylverbindungen bzw. olefinisch ungesättigte Monomere mit funktionellen Gruppen können insbesondere eingesetzt werden: Vinylester, Vinylether, Vinylhalogenide, Vinylidenhalogenide, Vinylverbindungen mit aromatischen Cyclen und Heterocyclen in α-Stellung, beispielsweise Vinylacetat, Vinylformamid, Vinylpyridin, Ethylvinylether, Vinylchlorid, Vinylidenchlorid und Acrylonitril. Weiterhin ist es bevorzugt, Monomere mit folgenden funktionellen Gruppen einzusetzen: Hydroxy-, Carboxy-, Säureamid-, Isocyanato- oder Aminogruppen.

Als Vinylverbindungen mit funktionellen Gruppen können auch sehr vorteilhaft Verbindungn der folgenden Struktur eingesetzt werden: 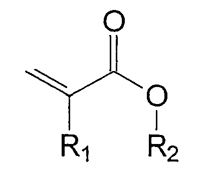 wobei R₁ = H oder CH₃ ist und der Rest -OR₂ die funktionelle Gruppe der Haftklebemasse darstellt oder beinhaltet und nicht als funktionelle Gruppe zur Vernetzung ---mit der aus b) gebildeten Base---dient.

Besonders bevorzugte Beispiele für die im Rahmen der Erfindung einzusetzenden Vinylverbindungen mit funktionellen Gruppen sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid, Benzylacrylat, Benzylmethacrylat, Phenylacrylat, Phenylmethacrylat, t-Butylphenylacrylat, t-Butylphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, 6-Hydroxyhexylmethacrylat, N-tert.-Butylacrylamid, N-Methylolmethacrylamid, N-(Butoxymethyl)methacrylamid, N-Methylolacrylamid, N-(Ethoxymethyl)acrylamid, N-Isopropylacrylamid, Vinylessigsäure, Tetrahydrofurfuryl-acrylat, β-Acryloyloxypropionsäure, Trichloracrylsäure, Fumarsäure, Crotonsäure, Aconitsäure, Dimethylacrylsäure, wobei diese Aufzählung nicht abschließend ist.

Ferner können aromatische Vinylverbindungen eingesetzt werden, wobei bevorzugt die aromatischen Kerne aus C₄ bis C₁₈ bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Weiterhin werden die Polymere zur Herstellung von Haftklebemassen optional mit Harzen abgemischt. Als Harze sind beispielsweise Terpen-, Terpenphenolharze, C.- und C.-Kohlenwasserstoffharze, Pinen-, Inden- und Kolophoniumharze allein und auch in Kombination miteinander einsetzbar. Prinzipiell lassen sich aber alle in dem entsprechenden Polyacrylat löslichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Weiterhin können Weichmacher, verschiedene Füllstoffe (beispielsweise Ruß, Ti0₂, Voll- oder Hohlkugeln aus Glas oder anderen Materialien, Keimbildner), Blähmittel, Compoundierungsmittel und/oder Alterungsschutzmittel zugesetzt werden.

In einer vorteilhaften Weiterentwicklung werden den Copolymeren UV-Fotoinitiatoren zugesetzt. Nützliche Fotoinitiatoren sind Benzoinether, wie z.B. Benzoinmethylether und Benzoinisopropylether, substituierte Acetophenone, wie z.B. 2,2-Diethoxyacetophenon (erhältlich als Irgacure 651 von Fa. Ciba Geigy), 2,2-Dimethoxy-2-phenyl-lphenylethanon, Dimethoxyhydroxyacetophenon, substituierte alpha-Ketole, wie z.B. 2-Methoxy-2-hydroxy propiophenon, aromatische Sulfonylchloride, wie z.B. 2-Naphthyl sulfonylchlorid, und fotoaktive Oxime, wie z.B. 1-Phenyl-1,2-propandion-2-(O-ethoxycarbonyl)oxim.

Die erfindungsgemäßen Polyacrylate werden direkt aus Lösung auf ein Trägermaterial beschichtet. In einer besonders bevorzugten Auslegung werden die Polyacrylate vom Lösemittel befreit und aus der Schmelze weiterverarbeitet. Zur Aufkonzentration wird besonders bevorzugt ein Doppelschneckenextruder verwendet, der gleich- oder gegenläufig betrieben wird.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwenden. Diese Aufzählung soll nicht abschließend sein.

Die Vernetzung der erfindungsgemäßen Schmelzhaftklebemassen erfolgt durch kurzzeitige UV-Bestrahlung im Bereich von 200 - 400 nm mit handelsüblichen Quecksilber-Hochdruck oder Mitteldrucklampen mit einer Leistung von z.B. 80 bis 200 W/cm oder ionisierende Strahlung, wie z.B. die Elektronenstrahlhärtung. Für die UV-Vemetzung kann es angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.

Für aus der Lösung beschichtete Haftklebemasse wird in einem Trockenkanal bei erhöhten Temperaturen das Lösemittel entfernt. Weiterhin kann die eingeführte Energie zur thermischen Vernetzung verwendet werden.

Die Erfindung betrifft weiterhin die Verwendung einer das erfindungsgemäße Polyacrylat enthaltenden Haftklebemasse.

Weiterhin ist Inhalt der Erfindung die Verwendung der so erhaltenen Haftklebemasse für ein Klebeband, wobei die Acrylathaftklebemasse als ein- oder doppelseitiger Film auf einem Träger vorliegt.

### Beispiele

Die folgenden beispielhaften Experimente sollen den Inhalt der Erfindung näher erläutern, ohne durch die Wahl der Beispiele die Erfindung unnötig einschränken zu wollen.

### Testmethoden

Zur Charakterisierung der Polyacrylatmassen und deren vernetzter Produkte dienten die im folgenden dargestellten Testmethoden-.

### Scherfestigkeit(Test A)

Ein 13 mm breiter Streifen des Klebebandes wurde auf eine glatte und gereinigte Stahloberfläche aufgebracht. Die Auftragsfläche betrug 20 mm x 13 mm (Länge x Breite). Anschließend wurde wie folgt vorgegangen:
Test A: Bei Raumtemperatur wurde ein 1 kg-Gewicht an dem Klebeband befestigt und die Zeit bis zum Abfallen des Gewichtes gemessen.

### Bestimmung des Gelanteils (Test B)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

### 180° Klebkrafttest (Test C)

Ein 20 mm breiter Streifen einer auf einer Polyestergecoateten Acrylat-haftklebemasse wurde auf Stahl Platten aufgebracht. Der Haftklebestreifen wurde zweimal mit einem 2 kg Gewicht auf das Substrat aufgedrückt. Das Klebeband wurde anschließend sofort mit 300 mm/min und im 180° Winkel vom Substrat abgezogen, Die Stahl Platten wurden zweimal mit Aceton und einmal mit Isopropanol gewaschen. Die Messergebnisse sind in N/cm angegeben und sind gemittelt aus drei Messungen. Alle Messungen wurden bei Raumtemperatur unter klimatisierten Bedingungen durchgeführt.

### Gelpermeationschromatographie (Test D)

Die Bestimmung des mittleren Molekulargewichtes M_{W} und der Polydispersität PD erfolgte in dem Eluent THF mit 0.1 Vol.-% Trifluoressigsäure eingesetzt. Die Messung erfolgte bei 25°C. Als Vorsäule wurde PSS-SDV, 5 µ, 10³ A, ID 8.0 mm x 50 mm verwendet. Zur Auftrennung wurden die Säulen PSS-SDV, 5 µ, 10³ sowie 10⁵ und 10⁶ mit jeweils ID 8.0 mm x 300 mm eingesetzt. Die Probenkonzentration betrug 4 g/l, die Durchflußmenge 1.0 ml pro Minute. Es wurde gegen PMMA-Standards gemessen.

### Bestimmung des Umsatzes (Test E)

Die Bestimmung des Umsatzes erfolgte durch Gaschromatographie und wird prozentual zu der Gewichtsmenge der eingesetzten Monomere angegeben. Die Restmonomere wurde via GC bestimmt, wobei für die einzelnen Monomere eine Kalibrierkurve erstellt wurde.

### Bestimmung der dynamischen Fließviskosität (Test F)

Die Messungen wurden mit dem Gerät Dynamic Stress Rheometer von Rheometrics durchgeführt. Zur Probenvorbereitung wurden die flüssigen Polymere auf einen silikonisierten Trennpapierträger aufgetragen und im Trockenschrank bei 120°C für 10 Minuten getrocknet. Der Masseauftrag betrug 100 g/m². Anschließend wurden Streifen geschnitten und diese übereinander laminiert, bis der Verbund eine Dicke von etwa 1 mm aufweist. Aus diesen Laminaten wurden kreisrunde Muster mit einem Durchmesser von 25 mm ausgeschnitten und die rheologischen Messungen mit diesen Laminaten durchgeführt. Bei 130°C wurde die Frequenz von 0.1 bis 100 rad/s variiert. Zum Vergleich werden die jeweils gemessenen Fließviskositäten bei 1 rad/s angegeben. Es wurde mit paralleler Plattenanordnung gemessen.

### Untersuchte Proben

Die für die Experimente verwendeten Proben wurden wie folgt hergestellt.

### Beispiel 1

Ein für radikalische Polymerisationen konventioneller 2 L-Glasreaktor wurde mit 20 g Acrylsäure, 380 g 2-Ethylhexylacrylat, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58 °C geheizt und 0,2 g Vazo 67™ (Fa. DuPont) hinzugegeben. Anschließend wurde das äußere Heizbad auf 75 °C erwärmt und die Reaktion konstant bei dieser Außentemperatur durchgeführt. Nach 2.5 h Reaktionszeit wurde mit 100 g Aceton verdünnt. Nach 4 h Reaktionszeit wurden nochmals 0,2 g Vazo 67™ hinzugegeben. Nach 5 h Polymerisationszeit wurde mit 100 g Aceton, nach 6 h mit 100 g Siedegrenzbenzin 60/95 verdünnt. Nach 24 h Reaktionszeit wurde die Polymerisation abgebrochen und das Reaktionsgefäß auf Raumtemperatur abgekühlt. Das Polymer wurde nach Testmethode D und E analysiert. Anschließend wurde das Polymer bei 80 °C im Trockenschrank vom Lösemittel befreit und anschließend aus der Schmelze durch eine Breitschlitzdüse mit 50 g/m² auf eine mit Saran geprimerte PET-Folie aufgetragen, mit Elektronenstrahlung mit einer Beschleunigungsspannung von 230 kV gehärtet und anschließend klebetechnisch mit den Testmethoden A, B und C analysiert.

### Beispiel 2

Ein für radikalische Polymerisationen konventioneller 2 L-Glasreaktor wurde mit 20 g Acrylsäure, 380 g 2-Ethylhexylacrylat, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58 °C geheizt und 0,2 g Vazo 67™ (Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurden 20 g Isopropanol hinzugegeben. Nach 2.5 h wurde mit 100 g Aceton verdünnt. Nach 4 h Reaktionszeit wurden nochmals 0,2 g Vazo 67™ hinzugegeben. Nach 7 h Polymerisationszeit wurde mit 100 g Siedegrenzbenzin 60/95, nach 22 h mit 100 g Aceton verdünnt. Nach 24 h Reaktionszeit wurde die Polymerisation abgebrochen und das Reaktionsgefäß auf Raumtemperatur abgekühlt. Das Polymer wurde nach Testmethode D und E analysiert. Anschließend wurde das Polymer bei 80°C im Trockenschrank vom Lösemittel befreit und anschließend aus der Schmelze durch eine Breitschlitzdüse mit 50 g/m² auf eine mit Saran geprimerte PET-Folie aufgetragen, mit Elektronenstrahlung mit einer Beschleunigungsspannung von 230 kV gehärtet und anschließend klebetechnisch mit den Testmethoden A, B und C analysiert.

### Beispiel 3

Ein für radikalische Polymerisationen konventioneller 2 L-Glasreaktor wurde mit 20 g Acrylsäure, 380 g 2-Ethylhexylacrylat, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58°C geheizt und 0,2 g Vazo 67^{™} (Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurden 60 g Isopropanol hinzugegeben. Nach 4 h Reaktionszeit wurden nochmals 0,2 g Vazo 67™ hinzugegeben. Nach 7 und nach 22 h Polymerisationszeit wurde mit jeweils 100 g Aceton verdünnt. Nach 24 h Reaktionszeit wurde die Polymerisation abgebrochen und das Reaktionsgefäß auf Raumtemperatur abgekühlt. Das Polymer wurde nach Testmethode D und E analysiert. Anschließend wurde das Polymer bei 80°C im Trockenschrank vom Lösemittel befreit und anschließend aus der Schmelze durch eine Breitschlitzdüse mit 50 g/m² auf eine mit Saran geprimerte PET-Folie aufgetragen, mit Elektronenstrahlung mit einer Beschleunigungsspannung von 230 kV gehärtet und anschließend klebetechnisch mit den Testmethoden A, B und C analysiert.

### Beispiel 4

Ein für radikalische Polymerisationen konventioneller 2 L-Glasreaktor wurde mit 20 g Acrylsäure, 380 g 2-Ethylhexylacrylat, 133 g Siedegrenzbenzin 69/95 und 133 g Aceton befüllt, Nachdem 45 Minuten Stickstoffgas unter Rühren durch die Reaktionslösung geleitet worden war, wurde der Reaktor auf 58°C geheizt und 0,2 g Vazo 67^{™} (Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurden 100 g Isopropanol hinzugegeben. Nach 4 h Reaktionszeit wurden nochmals 0,2 g Vazo 67^{™} hinzugegeben. Nach 22 h Polymerisationszeit wurde mit 100 g Aceton verdünnt. Nach 24 h Reaktionszeit wurde die Polymerisation abgebrochen und das Reaktionsgefäss auf Raumtemperatur abgekühlt. Das Polymer wurde nach Testmethode D und E analysiert. Anschließend wurde das Polymer bei 80°C im Trockenschrank vom

Lösemittel befreit und anschließend aus der Schmelze durch eine Breitschlitzdüse mit 50 g/m² auf eine mit Saran geprimerte PET-Folie aufgetragen, mit Elektronenstrahlung mit einer Beschleunigungsspannung von 230 kV gehärtet und anschließend klebetechnisch mit den Testmethoden A, B und C analysiert.

### Beispiel 5

Ein für radikalische Polymerisationen konventioneller 2 L-Glasreaktor wurde mit 20 g Acrylsäure, 380 g 2-Ethylhexylacrylat, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58°C geheizt und 0,2 g Vazo 67^{™} (Fa. DuPont) hinzugegeben. Anschließend wurde das äußere Heizbad auf 75°C erwärmt und die Reaktion konstant bei dieser Außentemperatur durchgeführt. Nach 2 h Reaktionszeit wurde mit 100 g Aceton, nach 3 h mit 100 g Siedegrenzbenzin 60/95 verdünnt. Nach 4 h Reaktionszeit wurden nochmals 0,2 g Vazo 67^{™} hinzugegeben, nach 5 h Reaktionszeit wurden 60 g Isopropanol hinzugegeben Nach 22 h Polymerisationszeit wurde mit 200 g Aceton verdünnt. Nach 24 h Reaktionszeit wurde die Polymerisation abgebrochen und das Reaktionsgefäß auf Raumtemperatur abgekühlt. Das Polymer wurde nach Testmethode D und E analysiert. Anschließend wurde das Polymer bei 80°C im Trockenschrank vom Lösemittel befreit und anschließend aus der Schmelze durch eine Breitschlitzdüse mit 50 g/m² auf eine mit Saran geprimerte PET-Folie aufgetragen, mit Elektronenstrahlung mit einer Beschleunigungsspannung von 230 kV gehärtet und anschließend klebetechnisch mit den Testmethoden A, B und C analysiert.

### Beispiel 6

Ein für radikalische Polymerisationen konventioneller 2 L-Glasreaktor wurde mit 20 g Acrylsäure, 380 g 2-Ethylhexylacrylat, 18 g Isopropanol und 248 g Aceton befüllt. Nachdem 45 Minuten Stickstoffgas unter Rühren durch die Reaktionslösung geleitet worden war, wurde der Reaktor auf 58°C geheizt und 0,2 g Vazo 67^{™} (Fa. DuPont) hinzugegeben. Anschließend wurde das äußere Heizbad auf 75°C erwärmt und die Reaktion konstant bei dieser Außentemperatur durchgeführt. Nach 2.5 h Reaktionszeit wurde mit 100 g Aceton/Isopropanol (93/7) verdünnt. Nach 4 h Reaktionszeit wurden nochmals 0,2 g Vazo 67^{™} hinzugegeben. Nach 5 h und nach 6h Reaktionszeit wurden mit jeweils 100 g Aceton/Isopropanol (93/7) verdünnt. Nach 24 h Reaktionszeit wurde die Polymerisation abgebrochen und das Reaktionsgefäß auf Raumtemperatur abgekühlt.

Das Polymer wurde nach Testmethode D und E analysiert. Anschließend wurde das Polymer bei 80°C im Trockenschrank vom Lösemittel befreit und anschließend aus der Schmelze durch eine Breitschlitzdüse mit 50 g/m² auf eine mit Saran geprimerte PET-Folie aufgetragen, mit Elektronenstrahlung mit einer Beschleunigungsspannung von 230 kV gehärtet und anschließend klebetechnisch mit den Testmethoden A, B und C analysiert.

Im folgenden werden die Ergebnisse beschrieben.

In Tabelle 1 sind für alle Beispiele die Umsätze sowie die Ergebnisse aus der Gelpermeationschromatographie dargestellt.

| Tabelle 1 | | | | | |
|---|---|---|---|---|---|
| Beispiel | Umsatz [%] Test E | M_{W} [g/mol] Test D | M_{W}/M_{N} Test D | M_{P1} [g/mol] Test D | M_{P2} [g/mol] Test D |
| 1 | 1.7 | 598500 | 4.6 | 767000 | -- |
| 2 | 2.0 | 575000 | 5.4 | 411000 | 690000 |
| 3 | 2.1 | 503000 | 11.7 | 356000 | 802500 |
| 4 | 1.2 | 440500 | 14.8 | 388000 | 730500 |
| 5 | 2.0 | 615500 | 11.2 | 462000 | 852000 |
| 6 | 2.0 | 455000 | 4.9 | 624000 | -- |

| | | | | | |
|---|---|---|---|---|---|
| M_{W} mittleres Molekulargewicht M_{W}/M_{N} Polydispersität M_{P1} Molekulargewichtspeak im GPC, für Population 1 und 2 respektive | | | | | |

Beispiel 1 ist die Referenz und verfügt über keine bimodale Molekulargewichtsverteilung. Dagegen wurden die Beispiele 2 bis 5 in einer zweiten Phase mit einem zusätzlichen Regler hergestellt. Als Regler wurde Isopropanol zugesetzt. In den Beispielen 2 bis 4 wurde der Zugabezeitpunkt mit einer Stunde nach Reaktionsstart konstant gehalten. Im Beispiel 5 wurde das Isopropanol nach 4 Stunden Reaktionsbeginn zugegeben. Beispiel 6 wurde konventionell mit konstantem Regleranteil gefahren und verfügt über eine monomodale Molekulargewichtsverteilung. Durch den erhöhten Regleranteil ist aber auch hier das mittlere Molekulargewicht mit 455000 g/mol relativ niedrig.

Im Vergleich zu den Referenzen weisen die in zwei Stufen hergestellten Polyacrylate eine sehr breite bimodale Molekulargewichtsverteilung auf. Die Polydispersität M_{W}/M_{N} liegt in allen Fällen oberhalb der Referenzen (Beispiel 1 + 6). Weiterhin sinkt mit steigender Zugabe des Reglers Isopropanol das mittlere Molekulargewicht ab. Ausnahme ist Beispiel 5, da hier durch die spätere Reglerzugabe nur die Polydispersität ansteigt. Die Beispiele 2 - 5 weisen jeweils zwei Peaks im GPC Spektrum auf, wobei die Peaks deutlich auseinander liegen. Somit wird das Kriterium einer bimodalen Verteilung erfüllt.
Die Umsätze liegen in allen Beispielen bei oberhalb 97 %.

In der folgenden Tabelle 2 werden die klebtechnischen Eigenschaften der einzelnen Beispiele aufgelistet und miteinander verglichen.

| Tabelle 2 | | | | |
|---|---|---|---|---|
| Beispiel | ES-Dosis [kGy] | Gelwert [%] (Test B) | SSZ 10 N, RT[min] (Test A) | KKS [N/cm] (Test C) |
| 1 | 40 | 40 | 1355 | 4.0 |
| 2 | 40 | 37 | 1280 | 4.6 |
| 3 | 70 | 38 | 1370 | 4.8 |
| 4 | 100 | 35 | 1195 | 5.0 |
| 5 | 50 | 42 | 1645 | 4.9 |
| 6 | 90 | 39 | 255 | 4.4 |

| | | | | |
|---|---|---|---|---|
| SSZ: Scherstandzeiten KKS. Klebkraft Stahl ES. Elektronenstrahlen | | | | |

Um die optimale Vernetzung zu erreichen, wurde mit unterschiedlichen Dosen vernetzt. Je geringer das mittlere Molekulargewicht das Haftklebemasse ist, desto höher muss die aufgebrachte ES-Dosis sein, um eine optimale und effiziente Vernetzung zu erreichen. Auf diese Weise lassen sich scherfeste Haftklebemassen generieren. Die Beispiele 1 bis 5 in Tabelle 2 belegen, dass die Unterschiede bezüglich der Scherfestigkeit sehr gering sind, wenn man sicherstellt, dass der Gelwert auf einem Niveau liegt. Dafür sind die Unterschiede in den Klebkräften bedeutend größer, da hier - vermutlich durch den größeren niedermolekularen Anteil - die Adhäsion zum Substrat ansteigt. Beispiel 6 zeigt eine bedeutend geringere Scherfestigkeit, vermutlich weil der hochmolekulare Anteil zu gering für eine kohäsive Acrylathaftklebemasse ist.

Für die Beschichtung als Hotmelt ist die dynamische Fließviskosität entscheidend. Daher wurde von allen Beispielen zum Vergleich die Fließvisksoität mit dem Rheometer bestimmt. Die Ergebnisse sind in der Tabelle 3 dargestellt.

| Tabelle 3 | |
|---|---|
| Beispiel | η [Pa s] bei 1 rad/s und 130°C (Test F) |
| 1 | 15525 |
| 2 | 10245 |
| 3 | 8475 |
| 4 | 6690 |
| 5 | 11425 |
| 6 | 12480 |

| | |
|---|---|
| η: Fliessviskosität bei 1 rad/s | |

Durch die monomodale Molekulargewichtsverteilung liegt die Fliessviskosität des Beispiels 1 auf sehr hohem Niveau. Im Vergleich hierzu sinkt durch die breite bimodale Verteilung die Fliessviskosität in den Beispielen 2 bis 5 deutlich ab. Diese Klebmassen sind somit bedeutend einfacher im Hotmeltprozess zu verarbeiten, da geringere Temperaturen aufgewendet werden müßen und die Polymere weniger geschädigt werden.

Weiterhin wird mit diesen Haftklebemassen ein annähernd identisches Klebeigenschaftsprofil erreicht, wobei zur Kompensation der breiteren Molekulargewichtsverteilung mit höherer ES-Dosis bestrahlt wurde. Beispiel 6 zeigt, dass durch das geringere mittlere Molekulargewicht ebenfalls die Fliessviskosität absinkt, aber die klebtechnischen Eigenschaften (insbesondere die Scherfestigkeit) nicht mehr der breiten bimodal verteilten Haftklebemassen erreicht wird.

## Patentansprüche

1. Verfahren zur Herstellung eines Polyacrylats mit wenigstens bimodaler Molekulargewichtsverteilung, **dadurch gekennzeichnet, dass** ein Monomerengemisch, enthaltend:
a1) Acrylsäure und/oder Acrylsäureester der Formel CH₂ = C(R')(COOR²), wobei R' = H oder CH₃ und R² eine Alkylkette mit 1 bis 20 C-Atomen ist, zu 70 - 100 Gew.-%, bezogen auf das Polymer,
a2) olefinisch ungesättigte Monomere mit funktionellen Gruppen, zu 0 - 30 Gew.-%, bezogen auf das Polymer,
in einer wenigstens zweiphasigen radikalischen Lösungsmittelpolymerisation in Gegenwart eines organischen Lösungsmittels oder in Gemischen aus organischen Lösungsmitteln zu einem Polyacrylat mit breiter wenigstens bimodaler Molekulargewichtsverteilung polymerisiert wird,
wobei in einer ersten Phase der wenigstens zweiphasigen Polymerisation durch eine im Verhältnis zum Monomer geringe Initiatorkonzentration zu einem ersten Polymerisat mit einem im Mittel hohen Molekulargewicht polymerisiert wird, wobei vor vollständigem Abreagieren der Monomermischung durch wenigstens einmaligen Zusatz eines Reglers eine nächste Phase der Polymerisation gestartet wird und wobei in dieser weiteren Phase oder weiteren Phasen ein weiteres Polymerisat mit einem im Mittel niedrigeren Molekulagewicht aufgebaut wird.

2. Verfahren nach Anspruch 1, **dadurch gekennzeichnet, dass** die wenigstens zweiphasige radikalische Polymerisation zu einem Gesamtumsatz aller Phasen größer 97 % gefahren wird.

3. Verfahren nach einem der Ansprüche 1 bis 2, **dadurch gekennzeichnet, dass** das Molverhältnis von Monomermischung zu Initiator kleiner als 0,005, bevorzugt kleiner als 0,003 ist.

4. Verfahren nach einem der Ansprüche 1 bis 3, **dadurch gekennzeichnet, dass** die Initiatorzugabe in mehreren Schritten erfolgt.

5. Verfahren nach einem der Ansprüche 1 bis 4, **dadurch gekennzeichnet, dass** als Regler Alkohole, Ether, Dithioether, Dithiocarbonate, Trithiocarbonate, Nitroxide, Alkylbromide, Thiole, TEMPO- oder TEMPO-Derivate eingesetzt werden.

6. Verfahren nach einem der Ansprüche 1 bis 5, **dadurch gekennzeichnet, dass** die Zugabe des Reglers frühestens nach einer Stunde Polymerisationszeit, aber spätestens zwei Stunden vor Polymerisationsende erfolgt.

7. Polyacrylat, wie erhältlich gemäß einem der Ansprüche 1 bis 6, **dadurch gekennzeichnet, dass** es folgende Monomereinheiten enthält:
a1) Acrylsäure und/oder Acrylsäureester der Formel CH₂ = C(R')(COOR²), wobei R' = H oder CH₃ und R² eine Alkylkette mit 1 bis 20 C-Atomen ist,
zu 70 - 100 Gew.-%, bezogen auf das Polymer,
a2) olefinisch ungesättigte Monomere mit funktionellen Gruppen, zu 0 - 30 Gew.-%, bezogen auf das Polymer,
und dass es eine breite wenigstens bimodale Molekulargewichtsverteilung aufweist, wobei die Molekulargewichtsmaxima in den Molekulargewichtsverteilungen wenigstens zweier Polymerisate um vorzugsweise wenigstens 50.000 g/mol auseinanderliegen.

8. Polyacrylat nach Anspruch 7, **dadurch gekennzeichnet, dass** die olefinisch ungesättigten Monomeren mit funktionellen Gruppen ausgewählt sind aus folgenden Vinylverbindungen mit funktionellen Gruppen: Maleinsäureanhydrid, Vinylacetat, Acrylamide, mit Doppelbindung funktionalisierte Photoinitiatoren.

9. Polyacrylat nach Anspruch 7 oder 8, **dadurch gekennzeichnet, dass** es weiterhin Vernetzer, Fotoinitiatoren, für Polyacrylate übliche Harze, Weichmacher, Füllstoffe, Blähmittel, Compoundierungsmittel und/oder Alterungsschutzmittel enthält.

10. Verwendung des Polyacrylates nach einem der vorstehenden Ansprüche als Haftklebemasse.

11. Verwendung nach Anspruch 10 für ein Klebeband, wobei die Acrylathaftklebemasse als ein- oder doppelseitiger Film auf einer Trägerfolie vorliegt.

## Claims

1. Process for preparing a polyacrylate having an at least bimodal molecular weight distribution, **characterized in that** a monomer mixture which comprises
a1) acrylic acid and/or acrylic esters of the formula CH₂=C(R')(COOR²), where R' = H or CH₃ and R² is an alkyl chain having 1 to 20 carbon atoms,
at 70%-100% by weight, based on the polymer,
a2) olefinically unsaturated monomers containing functional groups,
at 0-30% by weight, based on the polymer,
is polymerized in an at least two-phase free-radical solution polymerization in the presence of an organic solvent or in mixtures of organic solvents to give a polyacrylate having a broad, at least bimodal molecular weight distribution, polymerization taking place in a first phase of the at least two-phase polymerization, by means of a low initiator concentration relative to the monomer, to give a first polymer having a molecular weight which is high on average, and, before the monomer mixture has been completely consumed by reaction, a next phase of polymerization is started, by the addition at least once of a regulator, and in this further phase or further phases a further polymer is synthesized having a molecular weight which is relatively low on average.

2. Process according to Claim 1, **characterized in that** the at least two-phase free-radical polymerization is taken to a total conversion of all phases of greater than 97%.

3. Process according to any one of Claims 1 to 2, **characterized in that** the molar ratio of monomer mixture to initiator is less than 0.005, preferably less than 0.003.

4. Process according to any one of Claims 1 to 3, **characterized in that** the addition of initiator takes place in two or more steps.

5. Process according to any one of Claims 1 to 4, **characterized in that** alcohols, ethers, dithioethers, dithiocarbonates, trithiocarbonates, nitroxides, alkyl bromides, thiols, TEMPO or TEMPO derivatives are used as regulators.

6. Process according to any one of Claims 1 to 5, **characterized in that** the regulator is added no earlier than after one hour's polymerization time but no later than two hours before the end of polymerization.

7. Polyacrylate as obtainable according to any one of Claims 1 to 6, **characterized in that** it comprises the following monomer units:
a1) acrylic acid and/or acrylic esters of the formula CH₂=C(R')(COOR²), where R' = H or CH₃ and R² is an alkyl chain having 1 to 20 carbon atoms,
at 70%-100% by weight, based on the polymer,
a2) olefinically unsaturated monomers containing functional groups,
at 0-30% by weight, based on the polymer,
and **in that** it has a broad, at least bimodal molecular weight distribution, the molecular weight maxima in the molecular weight distributions of at least two polymers being preferably at least 50 000 g/mol apart.

8. Polyacrylate according to Claim 7, **characterized in that** the olefinically unsaturated monomers containing functional groups are selected from the following vinyl compounds containing functional groups: maleic anhydride, vinyl acetate, acrylamides, and double-bond-functionalized photoinitiators.

9. Polyacrylate according to Claim 7 or 8, **characterized in that** it further comprises crosslinkers, photoinitiators, resins customary for polyacrylates, plasticizers, fillers, expandants, compounding agents and/or aging inhibitors.

10. Use of the polyacrylate according to any one of the preceding claims as a pressure-sensitive adhesive.

11. Use according to Claim 10 for an adhesive tape, the acrylate pressure-sensitive adhesive being present as a single-sided or double-sided film on a carrier film.

## Revendications

1. Procédé pour la préparation d'un polyacrylate à distribution au moins bimodale de masse moléculaire, **caractérisé en ce qu'**on polymérise un mélange de monomères contenant :
a1) de l'acide acrylique et/ou un ester d'acide acrylique de formule CH₂=C(R¹)(COOR²), R¹ représentant H ou CH₃ et R² étant une chaîne alkyle ayant de 1 à 20 atomes de carbone,
à raison de 70-100 % en poids, par rapport au polymère,
a2) des monomères à insaturation oléfinique comportant des groupes fonctionnels,
à raison de 0-30 % en poids, par rapport au polymère,
dans une polymérisation radicalaire au moins biphasique dans un solvant, en présence d'un solvant organique ou dans des mélanges de solvants organiques, pour l'obtention d'un polyacrylate à large distribution au moins bimodale de masse moléculaire,
en effectuant la polymérisation dans une première phase de la polymérisation au moins biphasique au moyen d'une concentration d'amorceur faible par rapport au monomère, pour l'obtention d'un premier polymère ayant une masse moléculaire en moyenne élevée, en déclenchant avant la réaction complète du mélange de monomères, par addition au moins une fois d'un régulateur, une phase suivante de la polymérisation et dans cette nouvelle phase ou ces nouvelles phases un nouveau polymère ayant une masse moléculaire en moyenne plus faible étant formé.

2. Procédé selon la revendication 1, **caractérisé en ce que** la polymérisation radicalaire au moins biphasique est conduite jusqu'à un taux de conversion total de toutes les phases supérieur à 97 %.

3. Procédé selon la revendication 1 ou 2, **caractérisé en ce que** le rapport molaire du mélange de monomères à l'amorceur est inférieur à 0,005, de préférence inférieur à 0,003.

4. Procédé selon l'une quelconque des revendications 1 à 3, **caractérisé en ce que** l'addition de l'amorceur s'effectue en plusieurs étapes.

5. Procédé selon l'une quelconque des revendications 1 à 4, **caractérisé en ce qu'**on utilise comme régulateur des alcools, des éthers, des dithioéthers, des dithiocarbonates, des trithiocarbonates, des nitroxydes, des bromures d'alkyle, des thiols, des TEMPO ou dérivés de TEMPO.

6. Procédé selon l'une quelconque des revendications 1 à 5, **caractérisé en ce que** l'addition du régulateur s'effectue au plus tôt après une heure de polymérisation, mais au plus tard deux heures avant la fin de la polymérisation.

7. Polyacrylate, tel que pouvant être obtenu selon l'une quelconque des revendications 1 à 6, **caractérisé en ce qu'**il contient les motifs monomères suivants :
a1) de l'acide acrylique et/ou un ester d'acide acrylique de formule CH₂=C(R¹)(COOR²), R¹ représentant H ou CH₃ et R² étant une chaîne alkyle ayant de 1 à 20 atomes de carbone,
à raison de 70-100 % en poids, par rapport au polymère,
a2) des monomères à insaturation oléfinique comportant des groupes fonctionnels,
à raison de 0-30 % en poids, par rapport au polymère,
et **en ce qu'**il présente une large distribution au moins bimodale de masse moléculaire, les maximums de masse moléculaire dans les distributions de masse moléculaire d'au moins deux polymères se superposant de préférence par au moins 50 000 g/mole.

8. Polyacrylate selon la revendication 7, **caractérisé en ce que** les monomères à insaturation oléfinique comportant des groupes fonctionnels sont choisis parmi les composés vinyliques suivants à groupes fonctionnels : anhydride maléique, acétate de vinyle, acrylamides, photoamorceurs fonctionnalisés à double liaison.

9. Polyacrylate selon la revendication 7 ou 8, **caractérisé en ce qu'**il contient en outre des agents de réticulation, des photoamorceurs, des résines usuelles pour polyacrylates, des plastifiants, des charges, des agents gonflants, des agents de compoundage et/ou des agents antivieillissement.

10. Utilisation du polyacrylate selon l'une quelconque des revendications précédentes, en tant que matière autoadhésive.

11. Utilisation selon la revendication 10, pour un ruban adhésif, la matière autoadhésive acrylate étant présente sous forme d'un film simple face ou double face sur une feuille de support.
